# EUROPÄISCHE PATENTSCHRIFT

(11) **EP 0 525 443 B1**
(45) Veröffentlichungstag und Bekanntmachung des Hinweises auf die Patenterteilung: **24.05.1995**
(21) Anmeldenummer: 92111433.6
(22) Anmeldetag: 06.07.1992
(51) Int. Cl.: A61C 17/022, A61C 1/00, A61C 1/05

(54) **Medienheizung**
Media-heating
Chauffage pour milieux (liquides ou gazeux)

(30) Priorität: 23.07.1991 DE 4124412
(43) Veröffentlichungstag der Anmeldung: 03.02.1993
(73) Patentinhaber: KALTENBACH & VOIGT GMBH & CO., 88400 Biberach (DE)
(72) Erfinder: Schmid, Gerhard, W-7951 Mittelbiberach (DE)
(74) Vertreter: Schmidt-Evers, Jürgen, Dipl.-Ing.

(56) Entgegenhaltungen:
- DE-A- 2 252 330
- DE-A- 2 322 191
- FR-A- 1 269 231
- US-A- 2 390 710

## Beschreibung

Die Erfindung betrifft eine Vorrichtung zum geregelten Erwärmen von Medien in einem Handstück mit einer Medienleitung,der eine das Medium erwärmende elektrische Heizeinrichtung zugeordnet ist, die einen Kaltleiter-Widerstand und einen Heizstromkreis enthält.

Derartige Handstücke mit einer Heizeinrichtung zum Erwärmen von Medien sind insbesondere von zahnärztlichen Spritzhandstücken bekannt. Die zum Einsatz kommenden Medien wie Wasser und Luft müssen auf ein möglichst gleichbleibende Temperatur erwärmt werden. Dies ist jedoch angesichts der verschiedenen Betriebsverhältnisse schwierig zu erreichen. Aus der DE-A-22 52 330 ist eine Heizeinrichtung mit einem Durchlauferhitzer bekannt, bei der das Heizelement durch ein Heizwendel gebildet wird. Heizwendel haben den Nachteil, daß sie eine hohe Heizleistung erfordern, bei Vorbeiströmen des Mediums hoher Materialbeanspruchung ausgesetzt sind und die Medien nur ungenügend gleichmäßig erwärmen können. Darüber hinaus können Heizwendel nicht im Dauerbetrieb eingesetzt werden.

Aus der DE-A-23 22 191 ist eine Vorrichtung der Eingangs genannten Art bekannt. In dieser Vorrichtung wird ein Thermistor mit positiver Wärmezahl, d.h. ein Kaltleiter oder PTC-Element eingesetzt. In einer vergleichsweise aufwendigen Schaltung arbeitet der Widerstand in der positiven Spannungshalbwelle als Erwärmer, während er in der negativen Spannungshalbwelle als Sensor arbeitet, dessen Ausgangssignal mit der nachfolgenden Schaltung den Stromfluß in der positiven Spannungshalbwelle bestimmt. Die Doppelfunktion des Thermistors hat den Nachteil, daß nur eine Spannungshalbwelle für die Aufheizphase zur Verfügung steht, so daß die Medien vergleichsweise langsam aufgeheizt werden. Darüber hinaus besteht der Nachteil, daß die Steuerelektronik nicht von der Heizeinrichtung getrennt ist, so daß die Wartung der Heizeinrichtungen erschwert und ein Austausch aufwendig ist.

Aus der DE-OS 37 34 864 ist ein zahnärztliches Spritzhandstück bekannt, bei dem die mit Hilfe von Heizwendeln gebildeten elektrischen Heizeinrichtungen eine lösbar in dem Handstück angeordnete bauliche Einheit bilden.

Der Erfindung liegt die Aufgabe zugrunde, eine Vorrichtung der Eingangs genannten Art anzugeben, die eine kurze Aufheizzeit, eine einfache Wartung der Heizeinrichtung und die Festlegung eines bestimmten oberen Temperaturgrenzwerts erlaubt.

Diese Aufgabe wird mit den Merkmalen des Patentanspruches 1 gelöst.

Die Vorteile der Erfindung bestehen im wesentlichen darin, daß die bauliche Einheit aus Kaltleiter-Widerstand und Wärmetauscher eine große Austauschfläche auf kleinstem Raum ermöglicht. Die Form der Warmetauscher ist einfach herstellbar und mit dem Kaltleiter-Widerstand verbindbar. Eine derart ausgebildete bauliche Einheit läßt sich leicht als Heizung in ein zahnärztliches Handstück integrieren. Da die bauliche Einheit ein kleines Volumen besitzt, ermöglicht sie eine kurze Aufheizzeit. Als rein passives Element ermöglicht die bauliche Einheit einen einfachen Anschluß der Medienleitungen und des Heizstromkreises, so daß die bauliche Einheit als Heizelement einfach gewartet und ggfs. leicht auszutauschen ist.

Vorteilhafte Weiterbildungen der Erfindung sind in Unteransprüchen gekennzeichnet,

Ausführungsformen der Erfindung sind anhand der Figuren der Zeichnung beispielsweise dargestellt, und werden nachfolgend erläutert.

Gleiche Bezugszeichen stellen dabei gleiche Elemente dar. Es zeigt:
Fig.1 ein erste Ausführungsbeispiel einer erfindungsgemäßen Vorrichtung in einem Handstück,
Fig.2 ein Prinzipbild eines elektrischen und eines Absperrventils,
Fig.3 ein Prinzipbild des Heizstromkreises für die Anordnung gem. Fig.1
Fig.4 ein Prinzipbild des erfindungsgemäßen Kaltleiter-Widerstands mit Wärmetauscher,
Fig. 5 und Fig. 6 Querschnitte durch die bauliche Einheit gem. Fig.4,
Fig. 7 unterschiedliche Anordnungen für Kaltleiter-Widerstände,
Fig.8 ein zweites Auführungsbeispiel einer erfindungsgemäßen Vorrichtung in einem Handstück,
Fig.9 ein Prinzipbild für die Medien-und Heizsteuerung,
Fig.10 ein elektrisches Prinzipschaltbild für den Heizstromkreis für die Vorrichtung gem. Fig. 8,
Fig.11 und Fig.12 Diagramme zur Erläuterung der regelbaren Heizleistung für die Anordnung gem. Fig. 8.

Das dargestellte zahnärztliche Spritzhandstück 1 besteht aus einer Griffhülse, in der zwei von einem Medienanschluß zu einem Medienaustritt verlaufende und dort nach außen mündende Medienleitungen 2,3 angeordnet sind.

Eine Medienleitung ist an eine nicht dargestellte Wasserquelle, die andere an eine nicht dargestellte Luftquelle angeschlossen. Bei den Medienleitungen 2,3 ist jeweils eine das Medium erwärmende elektrische Heizeinrichtung mit zugehörigem Heizstromkreis 4 bis 10 zugeordnet.

Die elektrischen Heizeinrichtungen weisen Heizelementen 5,6 auf, die eine bauliche Einheit bilden und im Heizstromkreis 8,9,10 der elektrischen Heizeinrichtung liegen. Die Heizelemente 5,6 sind in einem Gehäuse 4 eingebaut, das lösbar in der Griffhülse eingesetzt ist. Die Heizelemente 5,6 widerrum sind lösbar in dem Gehäuse angeordnet.

Die Medienleitungen 2,3 sind derart mit den Heizelemente 5,6 bzw. den Gehäusen 4 verbunden, das die Medien jeweils auf einer Seite der Heizelemente eintreten und auf der jeweils anderen Seite wieder in die Medienleitungen 2,3 austreten können.

Die Gehäuse 4 bzw. damit verbundenen die Heizelemente 5,6 weisen jeweils zwei Anschlüsse auf, an denen elektrische Leitungen angeschlossen sind. Während die elektrische Anschlußleitung 10 direkt zu jeweils einem Anschluß 11 der beiden Heizelemente geführt ist, ist die elektrische Anschlußleitung 9 über einen Schalter an den jeweils anderen elektrischen Anschluß 11 des Heizelemente geführt. Da das Heizelement 5,6 eine bauliche Einheit bildet, werden die Begriffe im folgenden synonym verwendet.

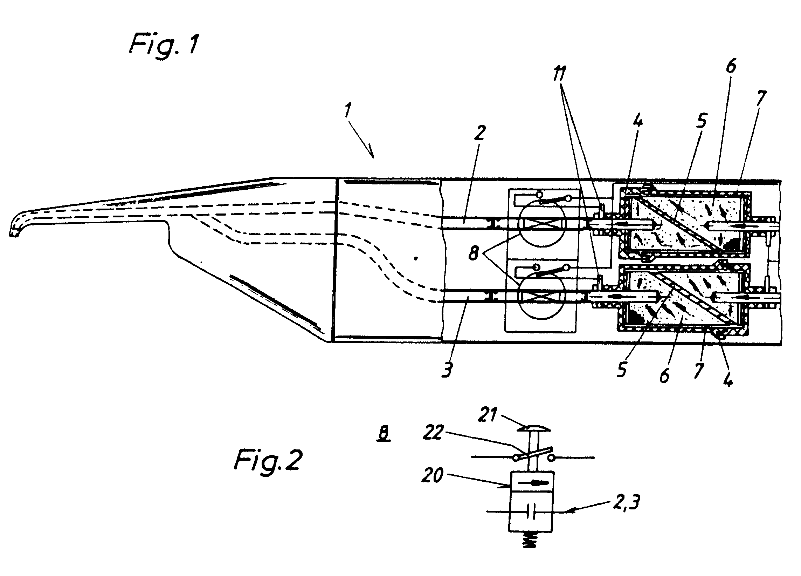

Die Elemente 8 stellen die Ventile für die elektrischen und die Medienleitungen dar und sind in Fig.2 näher ausgeführt. Mit einem Taster 21 läßt sich ein elektrischer Schalter 22 betätigen sowie ein Absperrventil 20 für eine Medienleitung 2 oder 3. Das Absperrventil kann dabei als pneumathisches oder als Magnetventil ausgebildet sein. Im Ruhezustand ist der Schalter 22 geöffnet und das Absperrventil 20 befindet sich im Sperrzustand. Dabei wird üblicherweise die flexible Medienleitung 2,3 von außen gequetscht, so daß kein Mediendurchtritt erfolgen kann. Bei Betätigung des Taster 21 wird einerseits der Schalter 22 geschlossen, so daß die Heizelemente ihre Funktion aufnehmen. Gleichzeitig wird das Absperrventil 20 geöffnet, so daß die Medien durch das Handstück durch zum Medienaustritt gelangen können. Selbstverständlich können die Medienkanäle zum Medienaustritt hin auch getrennt geführt werden. Es ist sowohl eine jeweils separate Steuerung jedes Mediums für sich möglich, als auch eine gemischte Steuerung, beispielsweise, wenn Wasser gesprüht werden soll.

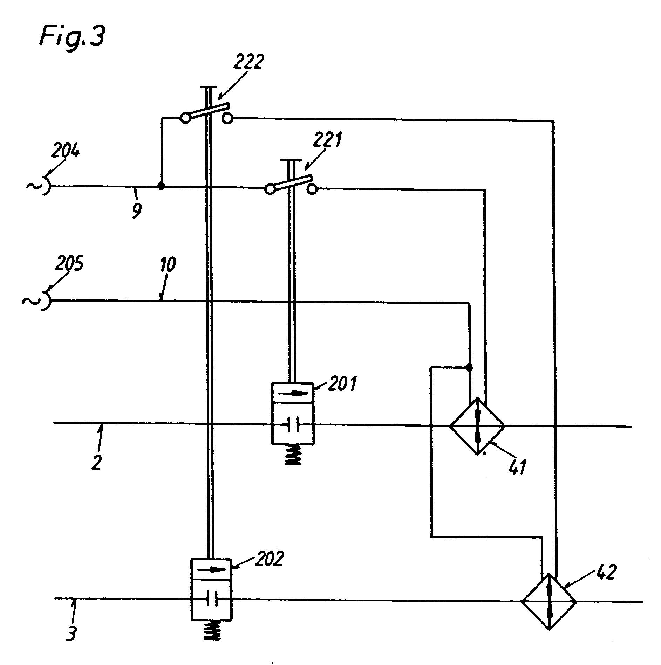

Gem. Fig.3 ist die elektrische Steuerung der Heizeinrichtungen 41,42 für die Medienleitungen 2, 3 dargestellt. Jeweils zwei Anordnungen gem. Fig.2 mit jeweils einem elektrischen Schalter 221, 222 und jeweils einem Absperrventil 201,202 steuern die Energiezufuhr bzw. die Medienzufuhr für die Heizeinrichtungen 41,42. Die Schalter 221,222 sind jeweils mit einer der Heizeinrichtungen 41,42 verbunden sowie andererseits jeweils mit einer elektrischen Anschlußleitung 9, die über eine Klemme 204 mit einer Spannungsquelle verbunden ist. Die elektrischen Heizeinrichtungen sind andererseits jeweils über die Anschlußleitung 10 mit einer Klemme 205 verbunden, die an einem anderen Pol der Versorgungsspannung liegt. Zwischen den beiden Klemmen 204 und 205 liegt somit die Versorgungs- bzw. Steuerspannung für die Heizeinrichtungen 41,42. Als Spannungsquelle dient üblicherweise eine Wechselspannungsquelle mit 24V Effektivspannung.

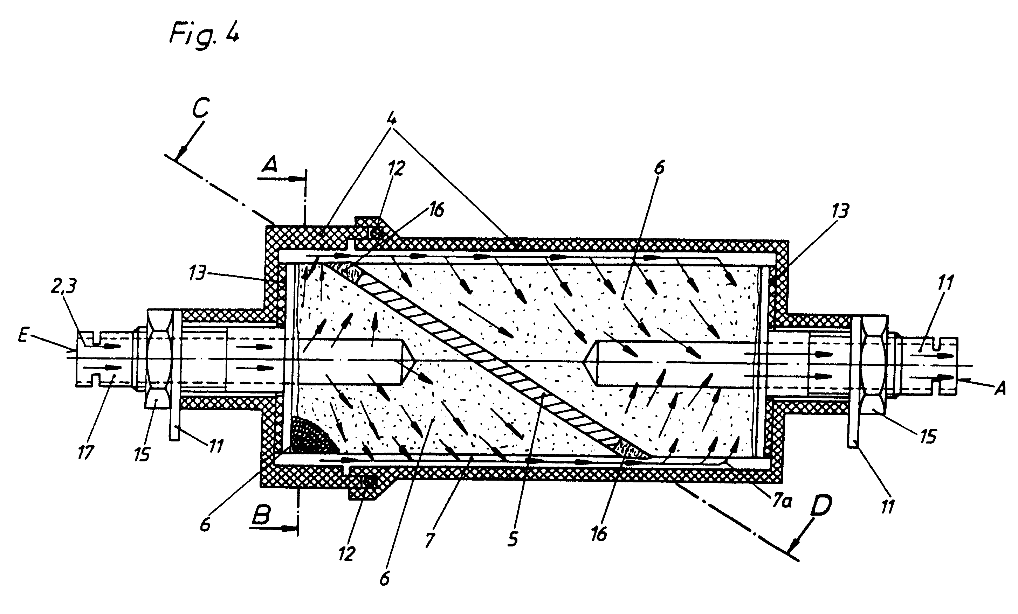

Eine bauliche Einheit bzw. Heizelement 5,6 ist mit dem entsprechenden Gehäuse in Fig.4 vergrößert dargestellt. Am Medieneingang E bzw. am Medienausgang A werden die Medienleitungen 2,3 vorzugsweise über Stecknippelanschlüsse 17 angeschlossen. Die bauliche Einheit 5,6 befindet sich in einem Gehäuse 4, das aus einem Isolierstoff bzw. Kunststoff besteht und über eine Dichtung, vorzugsweise eine O-Ringdichtung 12 mediendicht nach außen abgeschlossen ist. Sowohl die bauliche Einheit als auch das Gehäuse sind zylindrisch geformt. An den Stirnseiten des Gehäuses 4 befinden sich Anschlüsse 11, die mit einer Befestigungsmutter 15 am Gehäuse bzw. an der baulichen Einheit so befestigt sind, daß sie elektrisch leitfähig mit baulichen Einheit verbunden sind. Zwischen dem Außenmantel der baulichen Einheit 5,6 und dem Innenmantel des Gehäuses 4 ist ein Medienkanal 7 ausgebildet. Stirnseitig ist die bauliche Einheit gegen das Gehäuse mit einem Dichtgummi 13 mediendicht verbunden. Die bauliche Einheit bzw. das Heizelement selbst besteht aus einem Kaltleiter-Widerstand bzw. einem PTC-Widerstand 5 sowie einem Wärmetauscher 6. Der Kaltleiter 5 ist als Heizplatte ausgebildet und elektrisch leitend sowie wärmeleitend auf die beiden Elemente 6 aufgeklebt. Der Kaltleiter dient als eigentliches Heizelement, das aufgrund seines positiven Temperaturkoeffizienten einen Gleichgewichtszustand zwischen der aufgenommen elektrischen Leistung und einer damit verbundenen Temperatur einnimmt. Dieser Gleichgewichtszustand wird einmal bezüglich des Kaltleiters selbst eingenommen, zum anderen bei einer Wärmeabgabe an die Umgebung. Eine Wärmeabgabe an die Umgebung wirkt sich temperaturerniedrigend aus, so daß der Widerstandswert sinkt und mehr elektrische Leistung aufgenommen werden kann. Selbst geregelt stellt sich somit ein neuer Gleichgewichtszustand ein.

Der Wärmetauscher 6 ist gemäß Fig. 4 aus zwei Elementen gebildet, zwischen denen der Kaltleiter-Widerstand 5 angeordnet ist. Der Wärmetauscher verwendet Sintermetallteile, die in dem Sinterprozess nicht nur stückig gemacht sind, sondern auch eine bestimmte Porosität aufweisen. Je nach Grad der Porosität sind deshalb die gesinterten Wärmetauscherelemente an die vorbestimmten Medien anpassbar.

Die Medienzufuhr bzw. Medienabfuhr erfolgt über ein nicht näher bezeichnetes Loch, das direkt mit den Medienleitungen verbunden ist. Der Kaltleiter 5 ist mit seiner ausgedehnten Plattenfläche gegen die Zylinderachse der baulichen Einheit 5,6 geneigt. In Richtung zum Medienkanal 7 ist der Kaltleiter isoliert. Der Kaltleiter 5 sowie die radial anschließende Isolation bilden für die Medien eine Barriere. Ein durch den Medieneingang E einströmendes Medium wird deshalb gezwungen, über das an die Medienleitung 2,3 anschließende Loch in das Sintermaterial einzudringen und von dort zum Medienkanal 7 zu fließen. Hinter der durch den Kaltleiter 5 und den zugehörigen Isolierstoff gebildeten Barriere muß dann das Medium wieder über den Sinterwerkstoff sowie das darin vorhandene Loch zum Medienausgang A fließen. Dieser Zwangsdurchlauf wird ermöglicht durch das äußere Gehäuse 4, das an den konstruktiv vorgesehenen Stellen gegen das Heizelement 5,6 abgedichtet ist. Zur leichteren Wartung ist das Gehäuse 4 geteilt und das Heizelement 5,6 ist lösbar in dem Gehäuse angeordnet. Die Ausführung des Wärmetauschers mit Sintermetallen ermöglicht auf kleinstem Raum eine große Wärmeaustauschfläche. Darüber hinaus bietet das Sinterverfahren eine einfach herstellbare Wärmetauscherform. Insgesamt läßt sich eine deart kompakte Anordnung erreichen, daß das Heizelement mit Gehäuse 4 auch in doppelter Ausführung in ein zahnärztliches Handstück integrierbar ist. Aufgrund der kleinen Fläche ermöglich das Heizelement eine kleine Aufheizzeit, wobei bedingt durch die Tatsache, daß die Medien über den Medienkanal 7 und durch das Sintermaterial 6 selbst strömen müssen, dafür gesorgt, daß der Temperaturgradient des Medium gering bleibt. Die konstruktive Ausgestaltung des Heizelements mit Gehäuse ermöglicht es, sowohl die Medien als auch die Elektrik auf einfache Weise anzuschließen und somit im Wartungsfall einen leichten Zugriff zu haben sowie einen einfachen Austausch des Elements vornehmen zu können.

Darüber hinaus ermöglicht es die kompakte Bauform des Heizelements, das für den zahnärztlichen Gebrauch nur ein Handstück gefertigt werden muß, das später problemlos nachrüstbar ist sowohl mit den Heizelementen als auch mit der zugehörigen elektrischen Beschaltung.

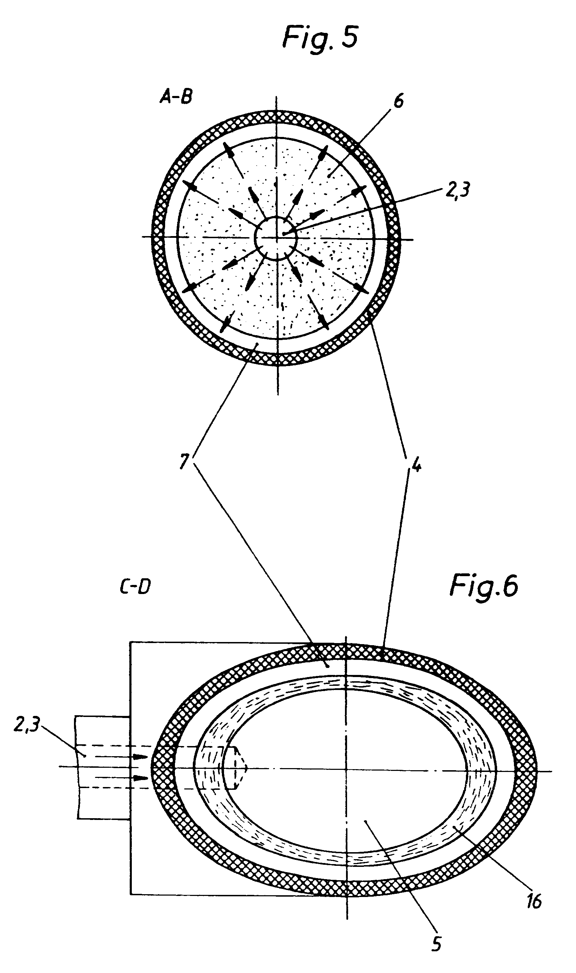

Die Fig. 5 und 6 stellen Schnitte durch die Anordnung gem. Fig. 4 anhand der Schnittlinien A-B bzw. C-D dar. Anhand der Fig. wird noch einmal das Prinzip des Medienflusses von der Medienleitung durch den Wärmetauscher sowie die konstruktive Ausgestaltung deutlich.

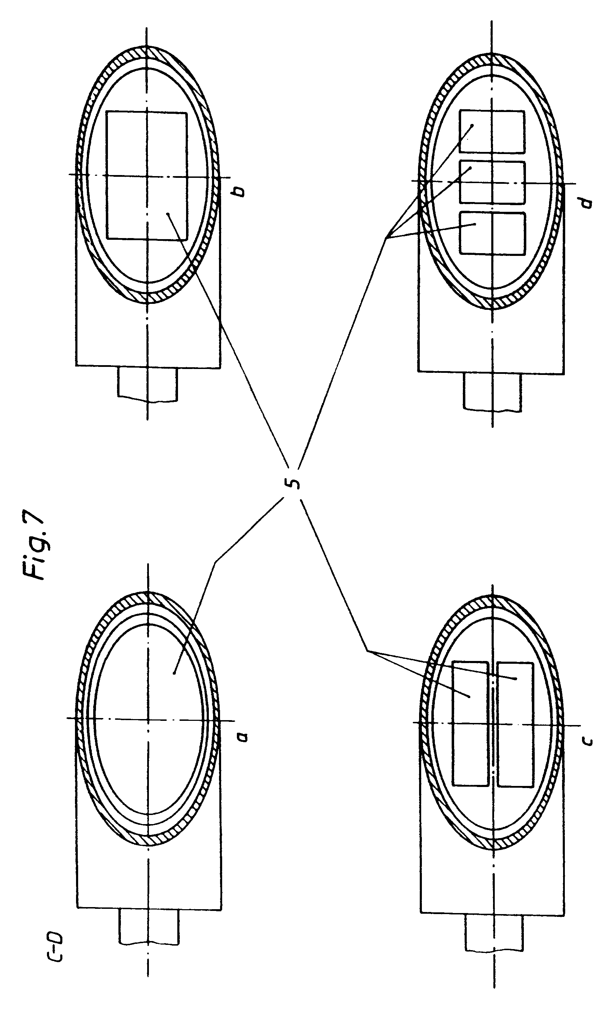

Fig. 7 zeigt einige Ausführungsformen für die geometrische Ausbildung der Kaltleiter-Widerstände 5. In Fig.7a) besitzt der Kaltleiter entsprechend dem Schnitt durch das im wesentlichen zylinderförmige Heizelement 5,6 eine elipsenförmige Außenkontur, in Fig.7b) einen rechteckigen Querschnitt. In Fig.7c) sind zwei rechteckige Kaltleiter nebeneinander angeordnet und in Fig.7d) drei in ihrer Kontur rechteckförmige Halbleiterelemente nebeneinander dargestellt.

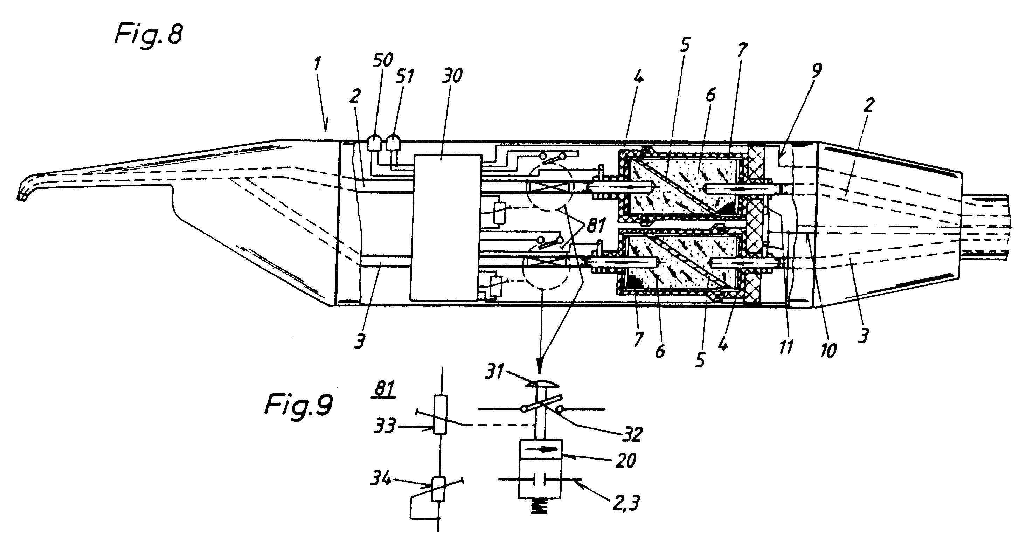

Fig.8 zeigt ein zweites Ausführungsbeispiel der erfindungsgemäßen Vorrichtung. Die bauliche Einheit aus den Elementen 5,6 und das zugehörige Gehäuse 4 sind entsprechend den Fig. 1 bzw. 4 ausgebildet. Der Unterschied zum Ausführungsbeispiel gem. Fig. 1 liegt in der Ausbildung des Heizstromkreises, in dem die bauliche Einheit liegt. Im folgenden wird deshalb nur auf die Unterschiede bezüglich der Fig. 1 eingegangen. Die Anordnung 8 gem. Fig. 1 ist durch eine Anordnung 81 in Verbindung mit den Elementen 30,50 und 51 modifiziert. Die Schalter- bzw. Ventilanordnung 81 ist mit einer elektronischen Einrichtung 30 verbunden. An die Elektronikeinrichtung 30 sind Leuchtdioden 50, 51 angeschlossen, die einen Heizbetrieb der Heizeinrichtung anzeigen. Die Schalter- bzw. Ventilanordnung 81 ist anhand von Fig. 9 näher dargestellt. Mit einem Taster 31 läßt sich ein elektrischer Schalter 32 schließen, der einen noch zu erläutertenden Kreis für die Ansteuerung eines steuerbaren Schaltelements schließt. Im Wirkungszusammenhang mit den Taster 31 steht ein veränderbarer Widerstand 33, der mit einem gegebenenfalls vorhandenen veränderbaren Widerstand 34 in Reihe liegt. Gleichzeitig mit dem elektrischen Schalter 32 wird mit dem Taster 31 das Ventil 20 für die Medienleitungen 2,3 betätigt.

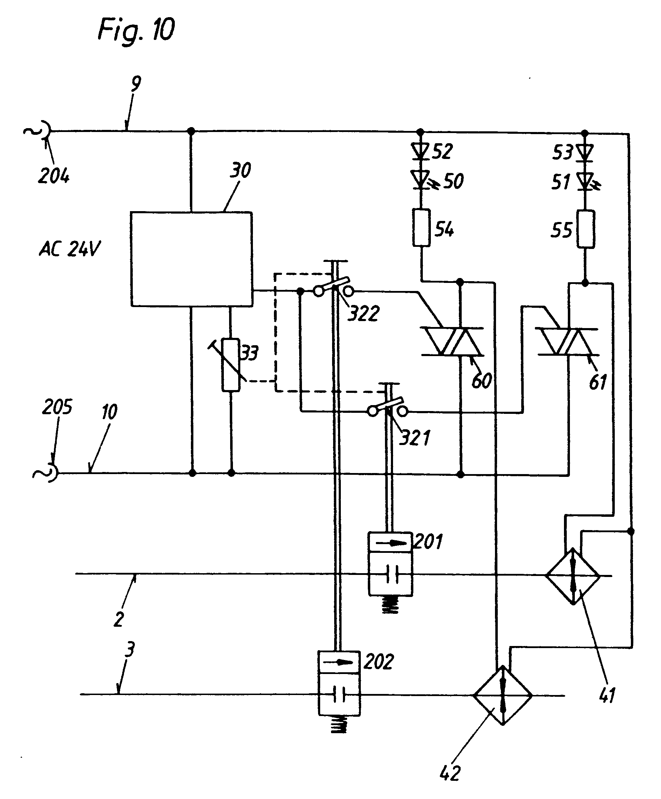

Einzelheiten in der Steuerung sind in Fig.10 dargestellt. Die Ventile 201 bzw. 202 für den Wasser-Medienkanal 2 bzw. den Luft-Medienkanal 3 werden von den Tastern 321 bzw. 322 betätigt. Die beiden Taster bilden zusammen mit der Anordnung 30 und dem veränderbaren Widerstand 33 ein Stellglied für die beiden steuerbaren Schaltelemente 60 sowie 61. Im Ausführungsbeispiel sind die steuerbaren Schaltelemente durch Triacs ausgebildet. Die Schalter 321 bzw. 322 steuern die jeweiligen Steuerelektroden der Triacs 60 bzw. 61 an. In ihrem Lastkreis sind beide Triacs 60,61 einerseits über die Leitung 10 mit der Klemme 205 der Versorgungsspannung verbunden. Der andere lastseitige Anschluß der beiden Triacs 60,61 ist jeweils mit einem elektrischen Anschluß der entsprechenden Heizeinrichtungen 42,41 verbunden. Weiterhin ist dieser Last-Ausgangsanschluß des jeweiligen Triacs 60,61 über jeweils eine Serienschaltung mit der Anschlußleitung 9 verbunden. Die Serienschaltung enthält jeweils eine Diode 52,53, eine Leuchtdiode 50,51 sowie einen Wiederstand 54,55. Dieser Kreis dient zur Anzeige des durchgeschalteten Triacs 60,61 bzw. des Heizzustandes für die Heizeinrichtung 41,42. Die Heizeinrichtungen 41,42 sind mit ihrem anderen elektrischen Anschluß mit der Leitung 9 verbunden, die über die Klemme 204 mit dem anderen Pol der Versorgungsspannungsquelle verbunden ist.

Zwischen die Leitungen 9 und 10 ist die Einrichtung 30 des Stellgliedes geschaltet, zwischen die Einrichtung 30 und die Leitung 10 der veränderliche Widerstand 33.

Während der Abtaster 321,322 einerseits für die Mediensteuerung über die Ventile 201,202 verantwortlich ist, und andererseits für die Ansteuerung des Triacs 60,61, dient der veränderbare Widerstand 33 für die Einstellung der gewünschten Heizleistung. Grundsätzlich kann die Heizleistung mit an sich bekannten Verfahren, beispielsweise einer Phasenanschnittssteuerung eingestellt werden.

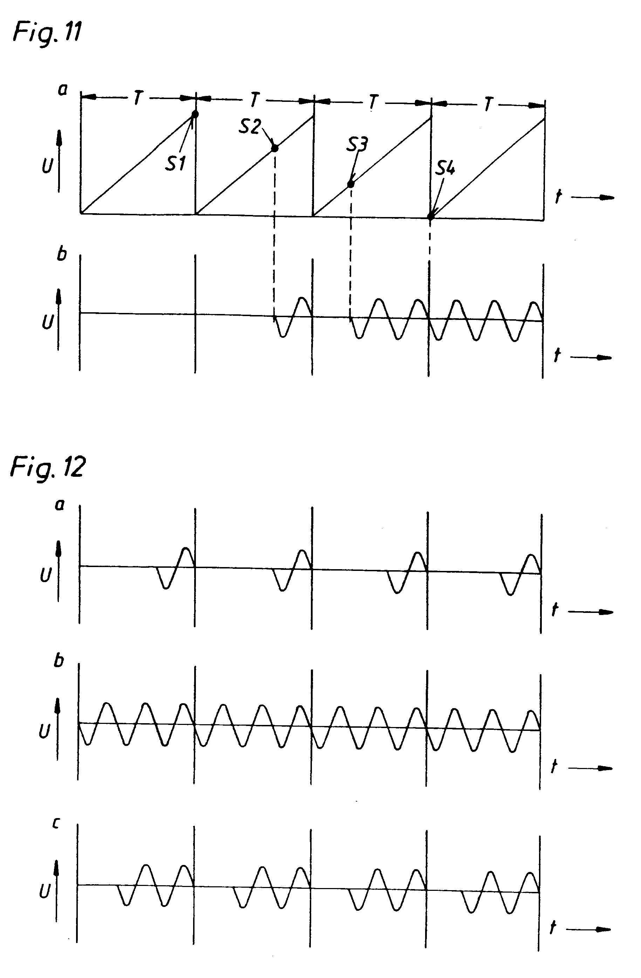

Die Einrichtung 30 im Ausführungsbeispiel ist als Impulspaketsteuerung ausgebildet. Dazu erzeugt die Einrichtung 30 mit Hilfe eines Rampengenerators eine Rampensignalspannung, die innerhalb ihrer Periode T jeweils von 0 auf einen bestimmten Endwert linear ansteigt. An den Tastern bzw. Schaltern 321,322 befindet sich der veränderbare Widerstand 33, der je nach Betätigungsweg bzw. Betätigungskraft der Taster seinen Widerstandswert ändert. Der Widerstandswert widerrum bestimmt die Schwelle, an der die Einrichtung 30 das an der Leitung 9 liegende Signal zum Schalter 321, 322 bzw. zum Steueranschluß des Thyristors 60,61 durchschaltet. Dies ist anhand von Fig.11 durch die unterschiedlichen Schaltpunkte S1 bis S4 beispielhaft gezeigt.

Abhängig vom Widerstandswert des Trimmers 33 steuert deshalb die Einrichtung 30 die Triacs 60,61 zu verschiedenen Zeitpunkten der jeweiligen Rampenfunktion durch, so daß bis zum Abschalten des Triacs mit abfallender Flanke der Rampengeneratorspannung nur eine bestimmte Anzahl von Impulspaketsignalen an den Triac 60,61 bzw. die Heizeinrichtung 41,42 gelangen können. Dies ist anhand von Fig. 11b) demonstriert. Unterschieden wird zwischen ausgeschalteter Heizung einem Heizungszwischenbereich und maximaler Heizleistung. Grundsätzlich läßt sich somit die Heizleistung zwischen 0 und 100% einstellen. Auf diese Weise gelingt eine Anpassung der elektrischen Leistung an den Medienverbrauch. Selbstverständlich ist es auch möglich, anders als in Fig.10 die Heizleistungen für die Heizeinrichtungen 41,42 getrennt einzustellen, wozu entweder die Elektronik entsprechend ausgebildet sein muß, oder aber zwei veränderliche Widerstände 33 vorgesehen sein müssen.

In einer anderen Ausführung erfolgt die Einstellung der Heizleistung über ein externes Potentiometer 34 gem. Fig.9, das separat auf eine feste Heizleistung durch den jeweiligen Anwender eingestellt werden kann. Damit ist die Heizleistung unabhängig vom Medienmengendurchfluß bzw. den Betätigungsweg oder die Betätigungskraft auf den Trimmer 33 die Taster 321, 322. Dieser Betriebszustand ist anhand von Fig. 12 dargestellt, in dem die Zustände a) für minimale Heizleistung, b) für maximale Heizleistung und c) für eine Begrenzung der Heizleistung über ein variabel einstellbares externes Potentionmeter dargestellt sind.

## Patentansprüche

1. Vorrichtung zum geregelten Erwärmen von Medien in einem Handstück mit einer Medienleitung, der eine das Medium erwärmende elektrische Heizeinrichtung zugeordnet ist, die einen Kaltleiter-Widerstand und einen Heizstromkreis enthält,
**dadurch gekennzeichnet,**
daß der Kaltleiter-Widerstand (5) als Heizelement mit einem Wärmetauscher (6) eine bauliche Einheit (5,6) bildet, die im Heizstromkreis (8,9,10) liegt.

2. Vorrichtung nach Anspruch 1,
**dadurch gekennzeichnet,**
daß als Wärmetauscher (6) Sintermetalle vorgesehen sind.

3. Vorrichtung nach Anspruch 1 oder 2,
**dadurch gekennzeichnet,**
daß der Kaltleiter-Widerstand (5) zwischen zwei Wärmetauscherelementen angeordnet ist.

4. Vorrichtung nach einem der Ansprüche 1 bis 3,
**dadurch gekennzeichnet,**
daß der Kalteleiter-Widerstand (5) elektrisch leitend und wärmeleitend an dem Wärmetauscher (6) angeordnet ist.

5. Vorrichtung nach Anspruch 3 oder 4,
**dadurch gekennzeichnet,**
daß der Kaltleiter-Widerstand (5) gegenüber seiner wärmetauscherfreien Umgebung isoliert ist.

6. Vorrichtung nach einem Ansprüche 1 bis 5,
**dadurch gekennzeichnet,**
daß der Kaltleiter-Widerstand (5) plattenförmig ausgebildet ist.

7. Vorrichtung nach einem der Ansprüche 1 bis 6,
**dadurch gekennzeichnet,**
daß die bauliche Einheit (5,6) an entgegengesetzten Enden Anschlüsse für die Medienleitung (2,3) und den Heizstromkreis (8,9,10) besitzt.

8. Vorrichtung nach Anspruch 7,
**dadurch gekennzeichnet,**
daß von jedem Anschluß für die Medienleitung (2,3) ein Kanal in den Wärmetauscher (6) führt.

9. Vorrichtung nach einem der Ansprüche 1 bis 8,
**dadurch gekennzeichnet,**
daß die bauliche Einheit (5,6) im wesentlichen Zylinderform hat.

10. Vorrichtung nach Anspruch 9, 3 und 6,
**dadurch gekennzeichnet,**
daß der Kaltleiter-Widerstand (5) mit seiner Plattenfläche im wesentlichen eine Trennebene der Zylinderform bildet und gegen die Zylinderachse geneigt ist.

11. Vorrichtung nach Anspruch 6 und 9 oder 10,
**dadurch gekennzeichnet,**
daß die Plattenfläche des Kaltleiter-Widerstands (5) im wesentlichen der Querschnittfläche durch die Zylinderform entspricht.

12. Vorrichtung nach Anspruch 6 und 9 oder 10,
**dadurch gekennzeichnet,**
die Plattenfläche des Kaltleiter-Widerstands (5) Rechteckform aufweist.

13. Vorrichtung nach einem der Ansprüche 1 bis 10,
**dadurch gekennzeichnet,**
daß mehrere Kaltleiter-Widerstände (5) nebeneinander angeordnet sind.

14. Vorrichtung nach einem der Ansprüche 1 bis 13,
**dadurch gekennzeichnet,**
daß die bauliche Einheit lösbar in einem Gehäuse (4) angeordnet ist.

15. Vorrichtung nach Anspruch 3 und 14,
**dadurch gekennzeichnet,**
daß die bauliche Einheit (5,6) und das Gehäuse (4) einen Medienkanal (7) bilden, daß der Medienstrom nach seinem Eintritt in die bauliche Einheit (5,6) ein Wärmetauscherelement durchfließt, um nach Durchlaufen des Medienkanals (7) das andere Wärmetauscherelement zu durchfließen.

16. Vorrichtung nach Anspruch 9 und 15,
**dadurch gekennzeichnet,**
daß der Medienkanal (7) zwischen dem Außenmantel der baulichen Einheit (5,6) und dem Innenmantel des im wesentlichen zylindrisch ausgebildeten Gehäuses (4) verläuft und daß die zugeordneten Stirnflächen gegeneinander abgedichtet sind.

17. Vorrichtung nach einem der Ansprüche 1 bis 16,
**dadurch gekennzeichnet,**
daß der Heizstromkreis (Fig. 10) ein steuerbares Schaltelement (60,61) enthält, das von einem Stellglied (81,30,33,321,322) betätigbar ist.

18. Vorrichtung nach Anspruch 17,
**dadurch gekennzeichnet,**
daß das steuerbare Schaltelement (60,61) einen Triac oder Thyristor umfaßt.

19. Vorrichtung nach Anspruch 17 oder 18,
**dadurch gekennzeichnet,**
daß mit dem Stellglied (81,30,33,321,322) ein Absperrventil (201,202) für die Medienleitung (2,3) gekoppelt ist.

20. Vorrichtung nach einem der Ansprüche 17 bis 19,
**dadurch gekennzeichnet,**
daß das Stellglied (81,30,33,321,322) eine durch einen Schalter (32,321,322) betätigbare Steuerungseinrichtung (30) umfaßt, die das steuerbare Schaltelement (60,61) ansteuert.

21. Vorrichtung nach Anspruch 20,
**dadurch gekennzeichnet,**
daß die Steuerungseinrichtung (30) Signale abgibt, mit denen die Heizleistung des Kaltleiter-Widerstands (5) einstellbar ist.

22. Vorrichtung nach Anspruch 20 oder 21,
**dadurch gekennzeichnet,**
daß die Steuerungseinrichtung (30) Impulspaketsignale aussendet, deren Dauer über ein Trimmelement (33) einstellbar ist.

23. Vorrichtung nach Anspruch 22,
**dadurch gekennzeichnet,**
daß das Trimmelement (33) über das Stellglied (31,32,321,322) einstellbar ist.

24. Vorrichtung nach einem der Ansprüche 1 bis 23,
**dadurch gekennzeichnet,**
daß ein Heizebetrieb optisch (50,51) angezeigt wird.

25. Vorrichtung nach einem der Ansprüche 1 bis 24,
**dadurch gekennzeichnet,**
daß die bauliche Einheit (5,6) mit dem Gehäuse (4) lösbar im Handstück (1) angeordnet ist.

## Claims

1. A device for controlled heating of mediums in a handpiece having a medium line associated with which is an electric heating device for heating the medium and which includes a PTC resistor and a heater circuit,
characterised in that,
the PTC resistor (5) as heating element together with a heat exchanger (6) forms a structural unit (5, 6) that lies in the heater circuit (8, 9, 10).

2. A device according to claim 1,
characterised in that,
sintered metals are provided as heat exchanger (6).

3. A device according to claim 1 or 2,
characterised in that,
the PTC resistor (5) is arranged between two heat exchanger elements.

4. A device according to any of claims 1 to 3,
characterised in that,
the PTC resistor (5) is arranged on the heat exchanger (6) in an electrically and thermally conductive manner.

5. A device according to claim 3 or 4,
characterised in that,
the PTC resistor (5) is insulated from its surroundings other than the heat exchangers.

6. A device according to any of claims 1 to 5,
characterised in that,
the PTC resistor (5) is in the form of a plate.

7. A device according to any of claims 1 to 6,
characterised in that,
the structural unit (5, 6) has on opposing ends connections for the medium lines (2, 3) and the heater circuit (8, 9, 10).

8. A device according to claim 7,
characterised in that,
a passage from each connection for the medium line (2, 3) leads into the heat exchanger (6).

9. A device according to any of claims 1 to 8,
characterised in that,
the structural unit (5, 6) has a substantially cylindrical form.

10. A device according to claim 9, 3 and 6,
characterised in that,
with its plate-like area the PTC resistor (5) substantially forms a separating plane in the cylindrical form and is inclined with respect to the cylinder axis.

11. A device according to claim 6 and 9 or 10,
characterised in that,
the plate-like area of the PTC resistor (5) corresponds substantially to the cross-sectional area through the cylindrical form.

12. A device according to claim 6 and 9 or 10,
characterised in that,
the plate-like area of the PTC resistor (5) has a rectangular shape.

13. A device according to any of claims 1 to 10,
characterised in that,
a plurality of PTC resistors (5) are arranged side by side.

14. A device according to any of claims 1 to 13,
characterised in that,
the structural unit is arranged detachably in a housing (4).

15. A device according to claim 3 and 14,
characterised in that,
the structural unit (5, 6) and the housing (4) form a medium passage (7), in that after entering the structural unit (5, 6) the medium flows through one heat exchanger element, then flows through the other heat exchanger element after flowing through the medium passage (7).

16. A device according to claim 9 and 15,
characterised in that,
the medium passage (7) extends between the outer periphery of the structural unit (5, 6) and the inner periphery of the housing (4), which is substantially cylindrical, and in that the associated end faces are sealed from one another.

17. A device according to any of claims 1 to 16,
characterised in that,
the heater circuit (Fig. 10) includes a controllable switching element (60, 61) that can be actuated by a control element (81, 30, 33, 321, 322).

18. A device according to claim 17,
characterised in that,
the controllable switching element (60, 61) includes a triac or a thyristor.

19. A device according to claim 17 or 18,
characterised in that,
a shut-off valve (201, 202) for the medium line (2, 3) is coupled to the control element (81, 30, 33, 321, 322).

20. A device according to any of claims 17 to 19,
characterised in that,
the control element (81, 30, 33, 321, 322) includes a control device (30) that can be activated by a switch (32, 321, 322) and which controls the controllable switching element (60, 61).

21. A device according to claim 20,
characterised in that,
the control device (30) issues signals with which the heating power of the PTC resistor (5) can be adjusted.

22. A device according to claim 20 or 21,
characterised in that,
the control device (30) sends out pulse packet signals, the duration of which can be set by a trimmer element (33).

23. A device according to claim 22,
characterised in that,
the trimmer element (33) can be adjusted by the control element (31, 32, 321, 322).

24. A device according to any of claims 1 to 23,
characterised in that,
a heating operation (50, 51) is indicated optically.

25. A device according to any of claims 1 to 24,
characterised in that,
the structural unit (5, 6) with the housing (4) is arranged detachably in the handpiece (1).

## Revendications

1. Dispositif pour le chauffage régulé de milieux dans une pièce à main comportant une conduite pour le milieu à laquelle est associé un dispositif électrique de chauffage du milieu qui comprend une thermistance CTP et un circuit de courant de chauffage, caractérisé par le fait que la thermistance CTP (5), en tant qu'élément chauffant, forme avec un échangeur de chaleur (6) une unité de construction (5, 6) qui est placée dans le circuit (8, 9, 10) de courant de chauffage.

2. Dispositif selon la revendication 1, caractérisé par le fait qu'il est prévu des métaux frittés conune échangeur de chaleur (6).

3. Dispositif selon la revendication 1 ou la revendication 2, caractérisé par le fait que la thermistance CTP (5) est disposée entre deux éléments échangeurs de chaleur.

4. Dispositif selon l'une des revendications 1 à 3, caractérisé par le fait que la thermistance CTP (5) est appliquée de manière électriquement et thermiquement conductrice contre l'échangeur de chaleur (6).

5. Dispositif selon la revendication 3 ou la revendication 4, caractérisé par le fait que la thermistance CTP (5) est isolée vis-à-vis de son environnement exempt d'échangeur de chaleur.

6. Dispositif selon l'une des revendications 1 à 5, caractérisé par le fait que la thermistance CTP (5) est agencée sous forme de plaque.

7. Dispositif selon l'une des revendications 1 à 6, caractérisé par le fait que l'unité de construction CTP (5, 6) comporte en des extrémités opposées des moyens de connexion pour la conduite pour le milieu (2, 3) et le circuit de courant de chauffage (8, 9, 10).

8. Dispositif selon la revendication 7, caractérisé par le fait qu'un canal mène de chaque moyen de connexion (2, 3) à l'échangeur de chaleur (6).

9. Dispositif selon l'une des revendications 1 à 8, caractérisé par le fait que l'unité de construction (5, 6) a une forme sensiblement cylindrique.

10. Dispositif selon les revendications 9, 3 et 6, caractérisé par le fait que la thermistance CTP (5) forme avec sa surface en forme de plaque un plan de séparation du cylindre et est inclinée par rapport à l'axe du cylindre.

11. Dispositif selon les revendications 6 et 9 ou 10, caractérisé par le fait que la surface en forme de plaque de la thermistance CTP (5) correspond sensiblement à la surface en section transversale du cylindre.

12. Dispositif selon les revendications 6 et 9 ou 10, caractérisé par le fait que la surface en forme de plaque de la thermistance CTP (5) est rectangulaire.

13. Dispositif selon l'une des revendications 1 à 10, caractérisé par le fait que plusieurs thermistances CTP (5) sont disposées côte à côte.

14. Dispositif selon l'une des revendications 1 à 13, caractérisé par le fait que l'unité de construction est disposée avec possibilité de démontage dans un boîtier (4).

15. Dispositif selon les revendications 3 et 14, caractérisé par le fait que l'unité de construction (5, 6) et le boîtier (4) forment un canal d'écoulement (7) pour le milieu, par le fait que le flux de milieu, après son entrée dans l'unité de construction (5, 6), traverse un élément échangeur de chaleur puis, après avoir parcouru le canal d'écoulement (7), traverse l'autre élément échangeur de chaleur.

16. Dispositif selon les revendications 9 et 15, caractérisé par le fait que le canal d'écoulement (7) s'étend entre "enveloppe extérieure de l'unité de construction (5, 6) et l'enveloppe intérieure du boîtier (4) sensiblement cylindrique et par le fait que les faces frontales associées sont appliquées de manière étanche l'une contre de l'autre.

17. Dispositif selon l'une des revendications 1 à 16, caractérisé par le fait que le circuit de courant de chauffage (figure 10) comporte un élément de commutation (60, 61) commandé qui est actionné par un organe de réglage (81, 30, 33, 321, 322).

18. Dispositif selon la revendication 17, caractérisé par le fait que l'élément de commutation (60, 61) commandé comporte un triac ou un thyristor.

19. Dispositif selon la revendication 17 ou la revendication 18, caractérisé par le fait qu'une vanne d'arrêt (201, 202) pour la conduite pour le milieu (2, 3) est couplée à l'organe de réglage (81, 30, 33, 321, 322).

20. Dispositif selon l'une des revendications 17 à 19, caractérisé par le fait que l'organe de réglage (81, 30, 33, 321, 322) comprend un dispositif de commande (30) qui est actionné par un commutateur (32, 321, 322) et commande l'élément de commutation (60, 61) commandé.

21. Dispositif selon la revendication 20, caractérisé par le fait que le dispositif de commande (30) délivre des signaux au moyen desquels la puissance de chauffage de la thermistance CTP (5) est réglée.

22. Dispositif selon la revendication 20 ou la revendication 21, caractérisé par le fait que le dispositif de commande (30) délivre des signaux sous forme de paquets d'impulsions dont la durée est réglée par un élément de compensation (33).

23. Dispositif selon la revendication 22, caractérisé par le fait que l'élément de compensation (33) est réglé par l'intermédiaire de l'organe de réglage (31, 32, 321, 322).

24. Dispositif selon l'une des revendications 1 à 23, caractérisé par le fait qu'un fonctionnement en mode chauffage est indiqué visuellement (50, 51).

25. Dispositif selon l'une des revendications 1 à 24, caractérisé par le fait que l'unité de construction (5, 6) avec son boîtier (4) est montée avec possibilité de démontage dans la pièce à main (1).
